# EUROPÄISCHE PATENTANMELDUNG

(11) **EP 1 209 401 A2**
(43) Veröffentlichungstag der Anmeldung: **29.05.2002**
(21) Anmeldenummer: 01127604.5
(22) Anmeldetag: 20.11.2001
(51) Int. Cl.: F16L 11/04, F16L 9/17

(54) **Verfahren zur Herstellung eines formstabilen Rohrkörpers aus einer Materialbahn und Verbinder zur Herstellung des Rohrkörpers**

(30) Priorität: 23.11.2000 DE 10058035
(71) Anmelder: Kühlmann, Josef, D-48366 Laer (DE)
(72) Erfinder: Kühlmann, Josef, D-48366 Laer (DE)
(74) Vertreter: Habbel, Hans-Georg, Dipl.-Ing.

(57) **Zusammenfassung**

Die Erfindung bezieht sich auf ein Verfahren zur Herstellung Eines formstabilen Rohrkörpers aus einem flexiblen, aber formbeständigen Werkstoff, insbesondere Kunststoff, der in Bahnform vorliegt, wobei die vorliegende Materialbahn (1) an ihren parallel zu ihrer Längsachse verlaufenden Randbereichen (3) mit Riegellöchern (2) versehen wird zu einem Rohrkörper gebogen wird und an die Randbereiche (3) ein Verbinder (4) angesetzt wird, der die zur Rohrform gebogene Materialbahn (1) stabilisiert. Die Erfindung bezieht sich weiterhin auf einen Verbinder (4) zur Durchführung des Verfahrens, der eine Bodenplatte (6), eine Riegelplatte (7) und auf der Bodenplatte (6) beiderseits einer Mittelachse (Y-Y) angeordnete, nach oben vorstehende Riegelzapfen (5) aufweist, die mit in der Materialbahn (1) vorgesehenen Riegel-löchern (2) die Randbereiche (3) der Materialbahn (1) miteinander ver-riegelnd zusammenarbeiten.

## Beschreibung

Die Erfindung bezieht sich auf ein Verfahren zur Herstellung eines Rohrkörpers gemäß dem Oberbegriff des Hauptanspruches und auf einen Verbinder zur Herstellung dieses Rohrkörpers gemäß dem Oberbegriff des Anspruches 2.

Beim Aufbau einer Stallanlage z. B. für Geflügelzuchtbetriebe, aber auch für andere der Tierhaltung dienende Ställe oder bei Fabrikationsanlagen, d. h. Industriebetrieben, sind der Luftführung dienende, formstabile Rohrleitungen erforderlich, die der Zu- und Abfuhr verbrauchter Luft bzw. Fristluft dienen und die häufig über die gesamte Länge, beispielsweise eines Stalles reichen, wobei ein solcher Stall eine Länge aufweisen kann, die über 100 m betragen kann.

Diese Rohrleitungen bestehen üblicherweise aus Metallrohren, die in entsprechenden Fertigungsbetrieben vorgefertigt werden und die dann an den Ort, in dem das mit den Belüftungsleitungen auszurüstende Gebäude vorgesehen ist, transportiert werden. Der Transport solcher Rohrleitungen ist außerordentlich raumaufwendig. Werden beispielsweise solche Stallanlagen in Europa hergestellt und nach Übersee exportiert, ist es erforderlich, daß die Rohrleitungen in Container verpackt werden. Die Container weisen aber nur eine gegenüber der Stallanlage gesehen geringe Länge auf und es werden also eine Vielzahl von Containern notwendig, um die insgesamt gewünschte Rohrleitung zu transportieren.

Die Herstellung dieser Rohrleitungen, beispielsweise aus Metall und entsprechend vorgefertigten Metallplatten, die also relativ wenig Transportraum benötigen würden, an Ort und Stelle, bereitet insofern Schwierigkeiten, da beim Aufbau des Stalles dann maschinelle Einrichtungen erforderlich werden, um die Platten zu Rohrkörpern zu biegen und in ihren Randbereichen zu befestigen, wobei das Biegen solcher Rohrkörper ebenfalls Formen erfordert, um die das Metallteil herumgebogen werden müßte.

Der Einsatz von aus Metall bestehenden Rohrleitungen in Stallanlagen ist unerwünscht, insbesondere, da durch die auftretende Feuchtigkeit eine Korrosion der Rohre nicht zu vermeiden ist.

Bei Schläuchen aus wärmeschrumpffähigem Material ist es bekannt, den Schlauch längsgeteilt auszubilden und mit Verschlusselementen entlang der Längsränder auszurüsten. Diese nicht formstabilen Schläuche dienen dazu, bestimmte Materialien zu umhüllen, beispielsweise Werkzeuge oder auch bei Kabel, diese im Bereich von Verbindungen nach außen abzudichten. Diese Schläuche sind aber nicht formstabil und daher nicht geeignet, beispielsweise als Rohrleitungen zur Luftführung eingesetzt zu werden (DE 31 48 135 A1).

Der Erfindung liegt die Aufgabe zugrunde, ein Verfahren vorzuschlagen, mit dem es möglich ist, raumsparend Kunststoffausgangsmaterial an eine Baustelle zu liefern, in der das eigentliche Gebäude aufgebaut wird, in welcher die Rohrleitung eingesetzt werden soll, wobei gleichzeitig aber erreicht werden muß, daß das in Bahnform vorliegende Kunststoffmaterial ohne Zuhilfenahme zusätzlicher maschineller Einrichtungen oder Formen in einen möglichst einwandfreien Rohrkörper, d. h. der wirklich im Querschnitt gesehen rund ausgebildet ist, geformt werden kann. Sind die Rohrkörper beispielsweise aus flexiblem Kunststoff nicht rund ausgestaltet, sondern elliptisch, setzt sich am Boden derartiger Leitungen Unrat ab, der dazu führt, daß einerseits die Leitung nur noch eine geringe Durchsatzleistung hat, andererseits können hier Nester von Bakterien entstehen, die unbedingt ausgeschaltet werden müssen.

Die der Erfindung zugrundeliegende Aufgabe wird durch die Lehre des Hauptanspruches gelöst.

Mit anderen Worten ausgedrückt wird vorgeschlagen, daß eine flexible, aber formbeständige, vorzugsweise aus Kunststoff bestehende Materialbahn an ihren parallel zu ihrer Längsachse verlaufenden Randbereichen mit Riegellöchern versehen wird, was bei der Herstellung der Materialbahn bei den dort vorhandenen maschinellen Einrichtungen problemlos möglich ist. Die Riegellöcher können hier mit einem genau gleichbleibenden Abstand sowohl voneinander wie auch gegenüber der Randkante der Materialbahn hergestellt werden. Diese so vorbereitete Materialbahn kann dann aufgerollt werden und stellt somit einen leicht handhabbaren, raumsparend zu transportierenden Körper dar, der ohne zusätzliche Hilfsmittel an Ort und Stelle, an der das Gebäude errichtet werden soll, abgerollt werden kann und auf die gewünschte Länge geschnitten werden kann. Nachdem die Materialbahn abgerollt ist, wird von Hand die Materialbahn zu einem Rohrkörper gebogen, und nunmehr werden in die Randbereich Riegelzapfen aufweisende Verbinder eingesetzt, deren Riegelzapfen in die Riegellöcher eingreifen, wobei über die Länge des Rohrkörpers gesehen eine Vielzahl solcher Verbinder vorgesehen wird.

Bei entsprechender Ausgestaltung der Verbinder kann durch diese Verbinder die gewünschte korrekte Rohrform der Materialbahn erzielt werden, wenn diese Materialbahn eine ausreichende Flexibilität, aber auch Starrheit aufweist, so daß sie nach dem Biegen und dem Verriegeln in ihren Randbereichen nicht zusammenfallen kann. Dies ist eine Frage der Materialwahl für die Materialbahn und eine Frage der Materialstärke der Materialbahn.

Die Erfindung bezieht sich weiterhin auf die Gestaltung des für die Durchführung des vorgenannten Verfahrens vorgeschlagenen Verbinder. Die Lösung ist im Anspruch 2 der Patentansprüche wiedergegeben.

Vorteilhafte Ausgestaltungen des Verbinders sind in den Unteransprüchen erläutert.

Mit anderen Worten ausgedrückt besteht der Verbinder gemäß einer ersten Ausführungsform aus einem Kunststoffmaterial und weist eine Bodenplatte und eine von der Bodenplatte getragene Riegelplatte auf. Die Riegelplatte ist dabei mit der Bodenplatte über einen Steg verbunden, der in der Mittelachse der Riegelplatte über deren ganzen Länge verläuft. Die Bodenplatte ist relativ starr ausgebildet, während die Riegelplatte relativ flexibel ausgebildet ist. Auf der Bodenplatte sind Riegelzapfen angeordnet, die bei der bevorzugten Ausführungsform der Erfindung durch entsprechende Durchbrüche in der Riegelplatte greifen, wobei diese Riegelzapfen zu den Randkanten des Verbinders hin abgeschrägt sind.

Gemäß einer zweiten Ausführungsform kann der Verbinder auch so ausgebildet sein, dass die eigentliche Riegelplatte Hülsen trägt, die vorzugsweise haubenförmig ausgebildet sind. In diese mit der Riegelplatte fest verbundenen Hülsen können die Riegelzapfen der Bodenplatte - nach Zwischenschaltung der Materialbahn mit ihren Riegellöchern - eingepresst oder eingedrückt werden und schaffen somit die feste Verbindung der Material-bahnränder.

Die Handhabung des Verbinders ist so, daß, wenn die Materialbahn beispielsweise von Hand in ihre Rohrform gebogen ist, nunmehr die Randkanten der Materialbahn mit ihren in diesen Randkantenbereichen vorgesehenen Riegellöchern so mit dem Verbinder in Kontakt gebracht werden, daß die Riegelzapfen in die Riegellöcher eingreifen können. Hierdurch werden die Randkanten der Materialbahn sicher festgelegt und die relativ starre Bodenplatte bewirkt, daß sich die Materialbahn in die gewünschte Rohrform biegt bzw. in der gewünschten Rohrform gehalten wird. Durch das Zusammenspiel zwischen den Riegellöchern in der Materialbahn und den Riegelzapfen mit den Durchbrüchen in der Riegelplatte bzw. den Hülsen in der Riegelplatte im Verbinder wird außerdem erreicht, daß eine wendelförmige Verformung der Materialbahn dann, wenn sie zur Rohrform gebogen wird, ausgeschlossen ist, denn sowohl die Riegellöcher werden maschinell hergestellt, sind also in ihrer Lage genau bestimmt, wie auch die Riegelzapfen, die am im Extrusionsverfahren hergestellten Verbinder an genau bestimmbaren Stellen angeordnet sind.

Vorzugsweise wird dabei so vorgegangen, daß die Riegellöcher in der Materialbahn und die Riegelzapfen im Verbinder quer zur Mittelachse des Verbinders gesehen einander gegenüberliegen, also nicht auf Lücke angeordnet sind. Hierdurch wird die Handhabung des Einsatzes des Verbinders und die Herstellung des Rohres vereinfacht.

Natürlich können auch die Riegelzapfen auf Lücke angeordnet sein und dann die Riegellöcher in der Materialbahn ebenfalls auf Lücke stehen. Dies erscheint jedoch aufwendiger als die gemäß der Erfindung vorgeschlagene Anordnung.

Zusammenfassend ist also festzustellen, daß durch den erfindungsgemäßen Vorschlag eine relativ dünne, korrosionsbeständige, leicht zu handhabende Materialbahn vorgeschlagen wird. Diese Materialbahn kann zu einer Rolle geformt werden oder in einzelne Bahnabschnitte zerlegt werden und ist daher auch für einen weiten Transport außerordentlich gut geeignet. Das Herstellen des Rohres aus der Materialbahn unter Einsatz der erfindungsgemäßen Verbinder kann ohne jede maschinelle Einrichtung, d. h. unter Verzicht auf Schweißmaschinen, Lochmaschinen, Nietmaschinen od. dgl. durchgeführt werden, kann also an Ort und Stelle auch von einem Laien oder von Hilfskräften durchgeführt werden.

Der Verbinder stabilisiert die Materialbahn in ihrer runden Rohrform und beim Biegen der Materialbahn und Einsetzen der Verbinder wird auf jeden Fall ausgeschlossen, daß sich die Materialbahn wendelförmig verformen kann.

Ein Ausführungsbeispiel der Erfindung wird nachfolgend anhand der Zeichnungen erläutert. Die Zeichnungen zeigen dabei in
- Fig. 1a: eine schaubildliche Darstellung eines Verbinders, in
- Fig. 1b: eine schaubildliche Darstellung einer abgeänderten Ausführungsform eines Verbinders, in
- Fig. 2: die zur Rohrform gebogene Materialbahn mit den Verriegelungslöchern, in
- Fig. 3: die zur Rohrform gebogene Materialbahn nach Verbinden der Randkanten der Materialbahn mit dem Verbinder, in
- Fig. 4: eine schematische und nicht maßstabsgerechte Darstellung des Arbeitsverfahrens unter Verwendung des ersten Verbinders und in
- Fig. 5: eine schematische und nicht maßstabsgerechte Darstellung des Arbeitsverfahrens unter Verwendung einer zweiten Ausführungsform des Verbinders.

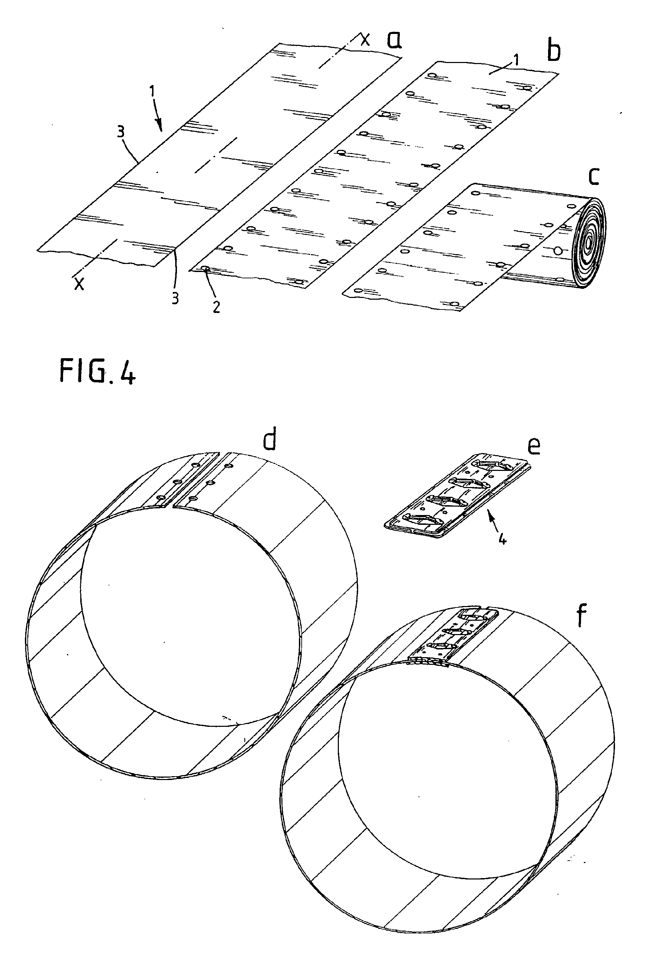

In Fig. 4 ist bei a eine aus Kunststoff bestehende Materialbahn 1 dargestellt, die eine Mittelachse X - X aufweist und Randkanten 3, die parallel zur Mittelachse X - X und damit in Längsachse der Materialbahn verlaufen.

Unter b ist in Fig. 4 die Materialbahn 1 dargestellt, die in einem nachfolgenden Bearbeitungsprozess mit Riegellöchern 2 versehen wurde, die sich im Randbereich befinden.

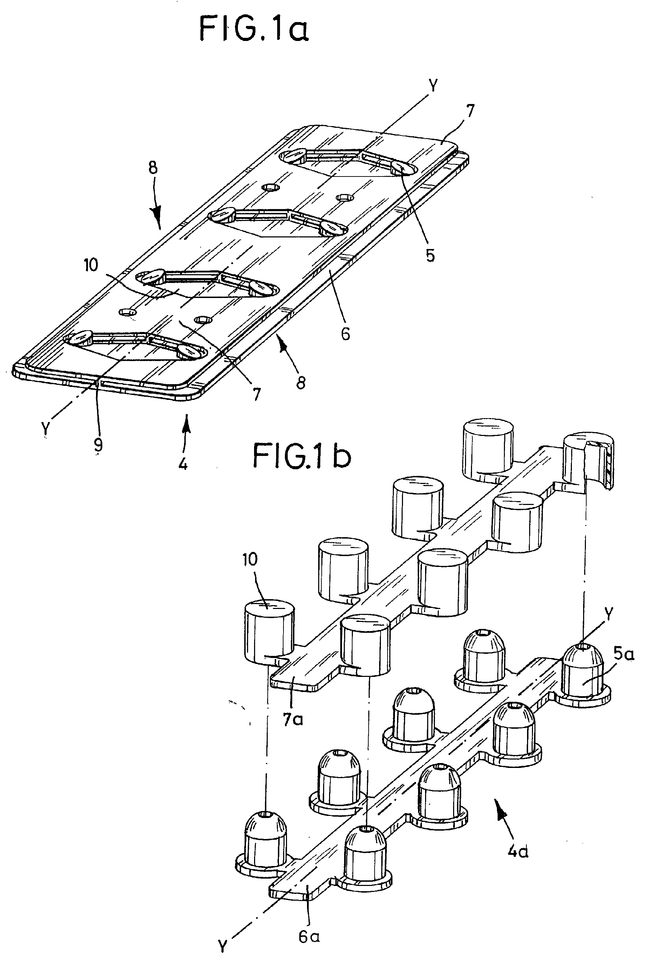

In Fig. 1a ist ein Verbinder 4 dargestellt, der eine Bodenplatte 6 aufweist, auf der Riegelzapfen 5 vorgesehen sind und eine Riegelplatte 7, die oberhalb der Bodenplatte 6 angeordnet ist und mit der Bodenplatte 6 über einen Steg 9 verbunden ist, wobei der Steg 9 vorzugsweise in der Mittelachse Y - Y des Verbinders 4 verläuft. Die Riegelzapfen 5 durchgreifen bei dem dargestellten Ausführungsbeispiel gemäß Fig. 1 in der Riegelplatte 7 vorgesehene Durchbrüche 10 und sind zu den Randkanten 8 der Bodenplatte 6 hin gerichtet abgeschrägt ausgebildet. Der Verbinder 4 besteht aus Kunststoff und kann im Extrusionsverfahren hergestellt werden, wobei die Bodenplatte relativ starr gestaltet ist und die Riegelplatte wesentlich flexibler, was durch entsprechende Materialstärken der Platten 6 und 7 erreicht werden kann.

In Fig. 1b ist ein Verbinder 4a dargestellt, der eine Bodenplatte 6a aufweist, auf der Riegelzapfen 5a vorgesehen sind. Außerdem ist eine Riegelplatte 7a vorgesehen, die Hülsen 10 trägt, die bei dem dargestellten Ausführungsbeispiel haubenförmig ausgebildet sind. Diese Hülsen 10 können zusammen mit der Riegelplatte 7a auf die Bodenplatte 6a aufgesetzt werden und dabei durchgreifen die Riegelzapfen 5a die Hülsen 10, wobei die Abmessungen so sind, dass beim Aufsetzen der Hülsen 10 auf die Riegelzapfen 5a ein Verklemmen der beiden Bauteile miteinander erfolgt. Auch der Verbinder 4a besteht aus Kunststoff und kann im Extrusionsverfahren hergestellt werden, wobei die Bodenplatte 6a relativ starr gestaltet ist und die Riegelplatte 7a wesentlich flexibler, was durch entsprechende Materialstärken der Platten 6a und 7a erreicht werden kann.

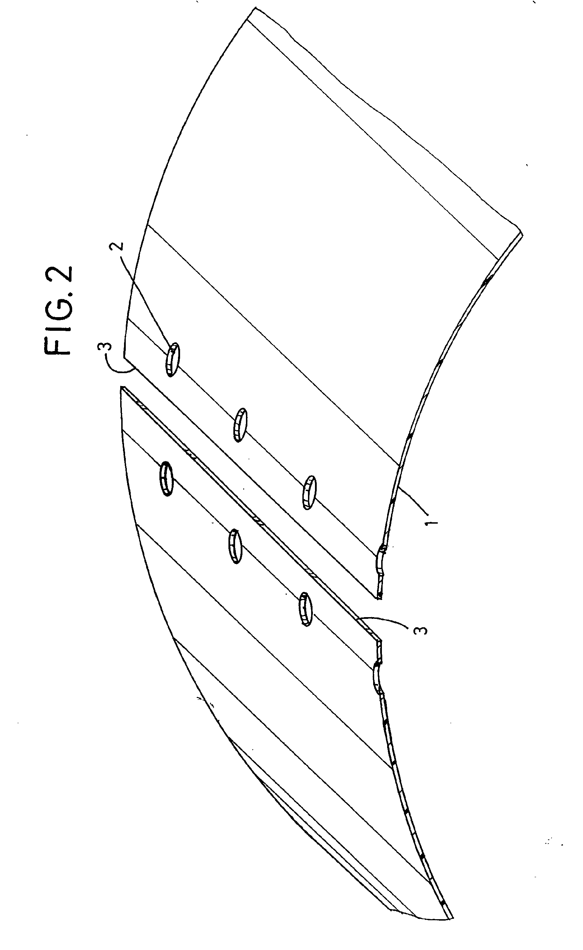

Fig. 2 zeigt, daß die in Fig. 4 dargestellte Materialbahn 1 zu einem Rohr gebogen werden kann, derart, daß die Randkanten der Materialbahn 3 einander benachbart sind und die Riegellöcher 2 in den Randbereichen 3 einander gegenüberliegend angeordnet sind.

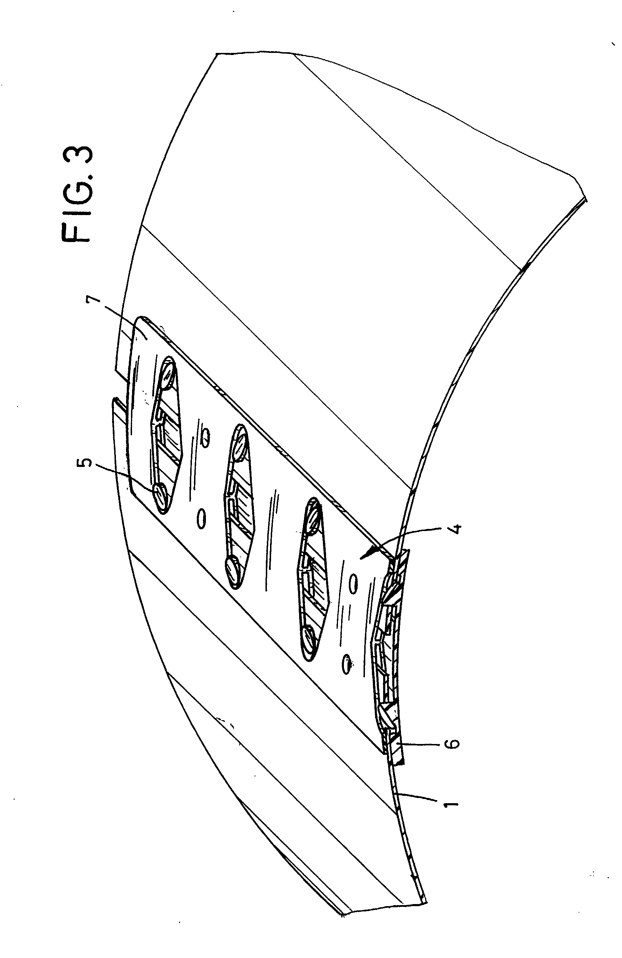

Fig. 3 zeigt, daß die Randbereiche 3 nunmehr in den Raum eingeführt werden können, der zwischen der Bodenplatte 6 und der Riegelplatte 7 des Verbinders 4 vorhanden ist, wobei dabei die Randbereiche 3 über die Riegelzapfen 5 geführt werden und die Riegellöcher 2 in den Randbereichen 3 nunmehr die Riegelzapfen 5 übergreifen, wobei die Riegelzapfen 5 durch die Riegellöcher 2 durch-treten und dadurch die Randbereiche der Materialbahn 1 an dem Verbinder 4 festlegen.

Da die Bodenplatte 6 des Verbinders 4 relativ starr ist, zwingt diese Bodenplatte nunmehr die Materialbahn in die gewünschte Rohrform, wobei dadurch, daß die Riegelplatte 7 flexibler als die Bodenplatte 6 ausgebildet ist, ein leichtes Einführen und Hochheben der Riegelplatte 6 zwecks Verriegelung der Riegellöcher 2 mit den Riegelzapfen 5 möglich wird.

Bei der Darstellung in Fig. 4 ist das durch den erfindungsgemäßen Vorschlag mögliche Arbeitsverfahren schematisch und nicht maßstabsgerecht dargestellt.

Ausgehend von der Materialbahn 1 gemäß Fig. 4a werden in dieser Materialbahn 1 Riegellöcher 2 eingestanzt und nunmehr besteht die Möglichkeit gemäß Fig. 4c, daß diese Materialbahn 1 raumsparend beispielsweise zu einer Rolle aufgerollt werden kann. In diesem Zustand kann die Materialbahn raumsparend zur Baustelle geliefert werden, beispielsweise auch in Container über weite Strecken verschifft werden und an Ort und Stelle, d. h. dem Einsatzbereich, dort wo ein Rohr zum Einsatz kommen soll, wird die Materialbahn gemäß Fig. 4c abgerollt und um ihre Längsachse X - X zu einem Rohr geformt, wie dies schematisch in Fig. 4d dargestellt ist. In dieses zum Rohr geformte Bauteil kann nunmehr gemäß Fig. 4e der Verbinder 4 angesetzt werden, der, wie anhand von Fig. 3 erläutert, nunmehr durch das Zusammenwirken der Riegelzapfen 5 mit den Riegellöchern 2 eine feste Verbindung der Randbereiche 3 der Materialbahn 1 ermöglicht, wobei die bestimmte Ausbildung und Materialwahl des Verbinders dieser sicherstellt, daß das so gebildete Rohr seine Rohrform beibehält.

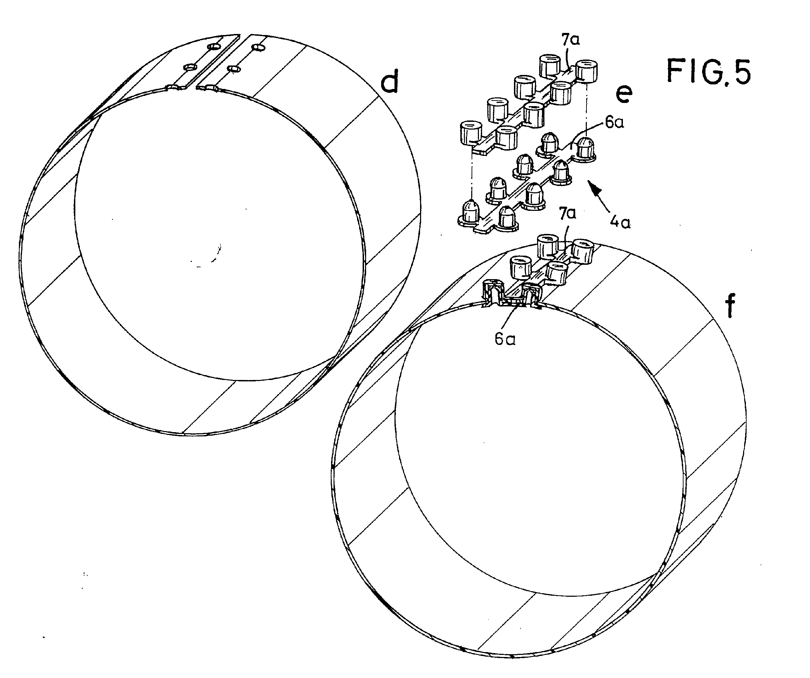

Bei der Darstellung gemäß Fig. 5 ist das aus der Materialbahn geformte Rohr in der Darstellung 5d erkennbar. In diesen rohrförmigen Körper oder während der Formung dieses rohrförmigen Körpers gemäß Fig. 5d kann die Bodenplatte 6a mit ihren Riegelzapfen 5a eingesetzt werden, wobei nach Einsetzen dieses Verbinders 4a nunmehr die Riegelplatte 7a aufgesetzt wird, so dass die Hülsen 10 die Riegelzapfen 5a umgreifen, und aufgrund ihrer vorauf erläuterten Klemmwirkung werden dann die Bodenplatte 6a und die Riegelplatte 7a miteinander unter Zwischenschaltung der Kanten des Rohres fest verbunden.

Es ist ersichtlich, daß das Herstellen dieses Rohres ohne weitere mechanische oder maschinelle Hilfsmittel möglich ist, d. h. die Herstellung des an der Baustelle gewünschten Rohres kann auch von jedem Hilfsarbeiter durchgeführt werden, was besonders bei in ländlichen Bereichen aufgestellten Stallanlagen von großer Bedeutung ist.

## Patentansprüche

1. Verfahren zur Herstellung eines formstabilen Rohrkörpers aus einem flexiblen aber formbeständigen Werkstoff, insbesondere Kunststoff, der in Bahnform vorliegt, **dadurch gekennzeichnet, daß**
a) die Materialbahn (1) an ihren parallel zu ihrer Längsachse (X - X) verlaufenden Randbereichen (3) mit Riegellöchern (2) versehen wird,
b) die Materialbahn (1) zu einem Rohrkörper gebogen wird,
c) an die Randbereiche (3) ein Riegelzapfen (5, 5a) aufweisender Verbinder (4, 4a) angesetzt wird, dessen Riegelzapfen (5, 5a) in die Riegellöcher (2) eingreifen und
d) über die Länge des Rohrkörpers (1) gesehen eine Vielzahl solcher Verbinder (4, 4a) vorgesehen wird.

2. Verbinder zur Herstellung eines Rohrkörpers aus einem flexiblen, aber formbeständigen Werkstoff, insbesondere Kunststoff, der in Bahnform vorliegt, **gekennzeichnet durch** eine Bodenplatte (6, 6a), eine Riegelplatte (7, 7a), auf der Bodenplatte (6, 6a) beiderseits einer Mittelachse (Y - Y) angeordnete, nach oben vorstehende Riegelzapfen (5, 5a), deren Größe und Abstand voneinander dem Abstand von in einer Materialbahn (1) an ihren parallel zu ihrer Längsachse (X - X) verlaufenden Randbereichen (3) vorgesehenen Riegellöchern (2) entspricht.

3. Verbinder nach Anspruch 2, **dadurch gekennzeichnet, dass** die Riegelplatte (7) mit der Bodenplatte (6) fest verbunden ist.

4. Verbinder nach Anspruch 2 oder 3, **dadurch gekennzeichnet, daß** die Riegelzapfen (5) zur Randkante (8) des Verbinders (4) abgeschrägt sind.

5. Verbinder nach Anspruch 2 oder 3, **dadurch gekennzeichnet, daß** die Riegelplatte (7) über einen in der Mittelachse (Y - Y) des Verbinders (4) verlaufenden Steg (9) mit der Bodenplatte (6) verbunden ist.

6. Verbinder nach einem der vorhergehenden Ansprüche 2 bis 5, **dadurch gekennzeichnet, daß** die Riegelzapfen (5) in der Riegelplatte (7) ausgearbeitete Durchbrüche (10) durchgreifen.

7. Verbinder nach Anspruch 2, **dadurch gekennzeichnet, daß** die Bodenplatte (6, 6a) aus einem nahezu starren, d. h. schwach flexiblem Werkstoff besteht.

8. Verbinder nach einem der Ansprüche 2 bis 6, **dadurch gekennzeichnet, daß** die Riegelplatte (7) aus einem flexiblen Werkstoff besteht.

9. Verbinder nach Anspruch 2, **dadurch gekennzeichnet, dass** die Riegelplatte (7a) Hülsen (10) trägt, die mit den Riegelzapfen (5a) der Bodenplatte (6a) zusammenwirken.

10. Verbinder nach Anspruch 9, **dadurch gekennzeichnet, dass** die Hülsen (10) haubenförmig ausgebildet sind.

11. Verbinder nach einem der vorhergehenden Ansprüche 2 bis 10, **dadurch gekennzeichnet, daß** der Verbinder (4, 4a) aus Kunststoff besteht.

12. Verbinder nach einem der vorhergehenden Ansprüche 2 bis 8, **dadurch gekennzeichnet, daß** die Riegelzapfen (5, 5a) und damit die Löcher (2) in der Materialbahn (1) quer zur Mittelachse (Y - Y) des Verbinders (4, 4a) gesehen einander gegenüberliegend angeordnet sind.
